# EUROPÄISCHE PATENTANMELDUNG

(11) **EP 2 279 709 A1**
(43) Veröffentlichungstag der Anmeldung: **02.02.2011**
(21) Anmeldenummer: 10004535.0
(22) Anmeldetag: 29.04.2010
(51) Int. Cl.: A61C 8/00

(54) **Behälter für ein medizinisches Instrument oder Implantat, insbesondere für ein dentalmedizinisches Instrument oder ein Dentalimplantat**

(30) Priorität: 27.07.2009 EP 09009674
(71) Anmelder: Straumann Holding AG, 4002 Basel (CH)
(72) Erfinder: Guenter, Daniel, 4002 Basel (CH); Bammerlin, Rainer, 4002 Basel (CH); Bugnard, Guillaume, 4002 Basel (CH)
(74) Vertreter: Schaad, Balass, Menzl & Partner AG

(57) **Zusammenfassung**

Die Erfindung betrifft einen Behälter (10) für ein medizinisches Instrument oder ein Implantat, insbesondere für ein dentalmedizinisches Instrument oder ein Dentalimplantat (36). Der Behälter (10) umfasst einen Aufnahmeteil (12) und einen relativ zu diesem von einer Schliessstellung in eine Offenstellung bewegbaren Gleitteil (14). Zwischen dem Aufnahmeteil (12) und dem Gleitteil (14) wirkt ein Verriegelungsmechanismus, welcher eine Rastverbindung aufweist.

## Beschreibung

Die vorliegende Erfindung betrifft einen Behälter für ein medizinisches Instrument oder ein Implantat, insbesondere für ein dentalmedizinisches Instrument oder ein Dentalimplantat, gemäss dem Oberbegriff des Patentanspruchs 1.

Für die Auslieferung von medizinischen Instrumenten oder Implantaten gibt es grundsätzlich zwei Möglichkeiten: Entweder liefert man solche Instrumente oder Implantate unsterilisiert aus, wobei eine Sterilisation, welche vor der Anwendung des Instrumentes oder des Implantates am Patienten unumgänglich ist, vom Chirurgen oder Arzt durchgeführt werden muss. Eine solche Vorgehensweise birgt jedoch immer das Risiko, dass die Sterilisation unvollständig und nicht ganz sauber durchgeführt wird, was mit späteren Komplikationen beim Patienten verbunden sein kann. Eine andere Möglichkeit, solche medizinische Instrumente oder Implantate auszuliefern, besteht darin, die Sterilisation vor der Auslieferung vom Hersteller durchführen zu lassen und das Instrument oder das Implantat in einem sterilen Zustand für eine sofortige Anwendung am Patienten auszuliefern. Ein Problem dieser Methode besteht darin, dass die Instrumente nach dem Öffnen der Sterilbarriere häufig in eine Antriebseinheit eingesetzt werden müssen, wie dies beispielsweise bei einem Bohrer der Fall ist. Implantate müssen entsprechend meistens mit einem Hilfswerkzeug aufgenommen werden, um mit diesem das Einsetzen des Implantates am Patienten zu bewerkstelligen. Dies ist zum Beispiel bei einem Dentalimplantat der Fall, welches häufig mittels eines Eindrehadapters und einer Ratsche in den Knochen eingedreht wird. Dabei muss gewährleistet werden, dass das Instrument oder das Implantat beim Herausnehmen aus dem Behälter und beim Einsetzen in das Antriebsinstrument oder das Hilfswerkzeug nicht chemisch, biologisch oder partikulär kontaminiert und dadurch unsteril wird.

Ein entsprechender Behälter für medizinische Instrumente ist beispielsweise aus DE 101 46 905 bekannt. Darin wird ein Instrumentenbehälter offenbart, welcher bei einfachem Aufbau eine einfache und sichere Anwendung, insbesondere die Handhabung eines sterilen medizinischen Instrumentes, ermöglicht. Der Instrumentenbehälter weist dabei einen Aufnahmeteil zur lösbaren Halterung zumindest eines Arbeitsteils des Instruments und einen lösbar an diesem Aufnahmeteil befestigten Kappenteil zur Aufnahme zumindest eines Teils des Schaftes des Instrumentes auf. Durch diese Trennung des Instrumentenbehälters in zwei Funktionseinheiten - den Aufnahmeteil und den Kappenteil - wird ermöglicht, dass das Instrument vom Hersteller sterilisiert und dem Arzt anwendungsbereit zur Verfügung gestellt werden kann und ein Einsetzen des Instrumentes in eine Antriebseinheit oder ein Hilfswerkzeug ohne Kontamination möglich ist.

Eine Aufgabe der vorliegenden Erfindung ist es, einen Behälter für ein medizinisches Instrument oder ein Implantat, insbesondere für ein dentalmedizinisches Instrument oder ein Dentalimplantat, bereitzustellen, der sicher transportiert werden kann. Das Entnehmen des medizinischen Instruments oder des Implantats für die Anwendung soll möglichst einfach sein. Des Weiteren soll der Behälter derart ausgebildet sein, dass das Instrument oder das Implantat möglichst wenig Kontaktflächen zum Behälter aufweist, so dass eine Sterilisation des Instrumentes oder Implantates einfacher zu bewerkstelligen ist.

Diese Aufgabe wird durch einen Behälter für ein medizinisches Instrument oder ein Implantat, insbesondere für ein dentalmedizinisches Instrument oder ein Dentalimplantat gelöst, welcher die Merkmale des Patentanspruchs 1 aufweist. Besonders bevorzugte Ausführungsformen und Merkmale sind Gegenstand der abhängigen Patentansprüche.

Der Behälter für ein medizinisches Instrument oder ein Implantat, insbesondere für ein dentalmedizinisches Instrument oder ein Dentalimplantat, gemäss der vorliegenden Erfindung weist einen Aufnahmeteil und einen Gleitteil auf. Der Gleitteil kann relativ zum Aufnahmeteil von einer Schliessstellung in eine Offenstellung bewegt werden, um den Behälter zu schliessen oder zu öffnen. Typischerweise ist die Schliessstellung diejenige Stellung, in welcher der Behälter transportiert und ausgeliefert wird, und typischerweise ist die Offenstellung diejenige Stellung, in welcher das Instrument oder Implantat aus dem Behälter herausgenommen werden kann. Des Weiteren ist der Behälter mit einem Verriegelungsmechanismus ausgestattet, welcher verhindert, dass der Gleitteil unbeabsichtigt bewegt werden kann und somit aus der Schliessstellung durch die Bewegung des Gleitteils relativ zum Aufnahmeteil in die Offenstellung übergehen kann. Der Verriegelungsmechanismus wirkt also zwischen dem Aufnahmeteil und dem Gleitteil. Der erfindungsgemässe Behälter ist dadurch gekennzeichnet, dass der Verriegelungsmechanismus eine zwischen dem Aufnahmeteil und dem Gleitteil wirkende Rastverbindung aufweist.

Der erfindungsgemässe Behälter ist insbesondere als Lager-und Transportbehälter für ein medizinisches Instrument oder ein Implantat, insbesondere für ein dentalmedizinisches Instrument oder ein Dentalimplantat, geeignet. Er garantiert eine sichere und stabile Lagerung des Instruments oder Implantats in seinem Inneren. Zudem erlaubt der auf einer Rastverbindung basierende Verriegelungsmechanismus ein einfaches Entriegeln des Behälters und erleichtert somit das Entnehmen des Instruments bzw. des Implantats aus dem Behälter.

In einer bevorzugten Ausführungsform ist der Gleitteil durch ein Verschieben entlang des Aufnahmeteils von der Schliessstellung in die Offenstellung bewegbar. Dabei wird der Gleitteil vorzugsweise durch ein Verschieben parallel zu einer Längsachse des Aufnahmeteils von der Schliessstellung in die Offenstellung bewegt. Eine solche Anordnung erlaubt es dem Anwender, den Behälter mit einer Hand zu öffnen: Er kann den Aufnahmeteil festhalten und gleichzeitig - mit derselben Hand - den Verriegelungsmechanismus entriegeln und den Gleitteil von der Schliessstellung in die Offenstellung bewegen. Dies erlaubt es ihm, mit der anderen Hand beispielsweise ein Werkzeug zu greifen.

Vorzugsweise bleibt der Gleitteil bei der Bewegung von der Schliessstellung in die Offenstellung in Kontakt mit dem Aufnahmeteil. Dadurch wird verhindert, dass der Gleitteil beim Öffnen des Behälters herunterfällt, beispielsweise in den Mund eines Patienten. Zu diesem Zweck ist der Gleitteil vorzugsweise beweglich am Aufnahmeteil gelagert, beispielsweise mit einem Scharnier oder gleitend mittels Formschluss. Alternativ kann der Behälter auch zusätzlich ein Sicherungselement aufweisen, welches den Gleitteil derart mit dem Aufnahmeteil verbindet, dass er zwar von der Schliessstellung in die Offenstellung bewegt, gleichzeitig aber nicht vollständig vom Aufnahmeteil getrennt werden kann. Dies kann beispielsweise mittels eines elastischen Verbindungsstücks zwischen Gleitteil und Aufnahmeteil, eines Rasters oder eines Clicks bewerkstelligt sein.

Die zwischen dem Gleitteil und dem Aufnahmeteil wirkende Rastverbindung kann durch eine beliebige Kombination von einer oder mehreren Rastvertiefungen mit einem oder mehreren Rastzähnen gebildet sein. Ein Verschieben gegeneinander wird dabei vorzugsweise durch Kraftschluss verhindert, also durch eine Verbindung, die zerstörungsfrei lösbar ist, wenn eine bestimmte Grenzkraft überschritten wird. In einer bevorzugten Ausführungsform weist der Aufnahmeteil mindestens eine Rastvertiefung auf und der Gleitteil mindestens einen Rastzahn, der mit der Rastvertiefung am Aufnahmeteil zusammenwirkt. Vorzugsweise weist der Aufnahmeteil mehrere, seriell angeordnete Rastvertiefungen auf, welche beispielsweise als rechtwinklig zur Längsachse des Aufnahmeteils verlaufende Nuten ausgestaltet sind, und der Gleitteil einen einzelnen Rastzahn.

Weiter ist es besonders bevorzugt, dass der Aufnahmeteil zwei Serien von paarweise, auf zwei gegenüberliegenden Längsseiten des Aufnahmeteils angeordneten Rastvertiefungen aufweist und der Gleitteil ein Paar von Rastzähnen, welche je in eine Serie von Rastvertiefungen am Aufnahmeteil eingreifen. Alternativ wäre es aber auch möglich, dass der Aufnahmeteil eine oder mehrere Vorsprünge aufweist, welche in eine oder mehrere Rastvertiefungen am Gleitteil eingreifen.

Zum Entriegeln des Gleitteils muss die Rastverbindung, die vorzugsweise auf Kraftschluss basiert, gelöst werden, beispielsweise indem der oder die Rastzähne aus der oder den Rastvertiefungen herausgehoben werden. Dies erfolgt vorzugsweise indirekt, indem ein an den Rastzahn angrenzender Bereich des Gleitteils als "Kipp-Hebel" eingesetzt wird, wobei zum Entriegeln auf das entfernte Ende dieses Hebels ein Druck ausgeübt wird, so dass sich der oder die Rastzähne abheben. Alternativ kann die Rastverbindung auch direkt gelöst werden, indem beispielsweise an einem am Gleitteil angeordneten Griff gezogen wird.

Der erfindungsgemässe Behälter ist insbesondere als Lager-und Transportbehälter für Dentalimplantate, besonders bevorzugt für vollkeramische Dentalimplantate, geeignet. Dabei enthält der Behälter vorzugsweise einen Adapter und ein Dentalimplantat, insbesondere ein einteiliges Keramikimplantat. Der Adapter ist dabei so angeordnet, dass er formschlüssig mit dem Implantat verbunden ist. Um eine Rotation des Adapters relativ zum Aufnahmeteil zu verhindern, weisen Adapter und Aufnahmeteil vorzugsweise eine oder mehrere korrespondierende Vertiefungen respektive Vorsprünge auf. Vorzugsweise weist der Adapter eine lösbare Klemmvorrichtung, beispielsweise in Form von Federfingern oder Schnapplippen auf, um das Implantat zu umgreifen und relativ zum Adapter zu fixieren. Vorzugsweise weist das Dentalimplantat nur minimale Kontaktflächen mit dem Adapter auf.

Zum Entnehmen des Implantats aus dem Behälter wird ein Halter noch in Schliessstellung des Behälters in den Adapter eingeführt und verbindet sich formschlüssig mit dem Implantat. Der Adapter dient dabei zur Findung der korrekten rotatorischen Ausrichtung des Halters relativ zum Implantat. Alternativ wäre es natürlich auch möglich, den Halter bereits vor dem Transport oder der Sterilisation in den Behälter einzuführen und mit dem Implantat zu verbinden. Ein weiterer Vorteil des erfindungsgemässen Behälters ist somit, dass Implantat/Adapter auch dann für einen Halter zugänglich sind, wenn sich der Gleitteil in Schliessstellung befindet. Die Bewegung von der Schliess- in die Offenstellung ist somit unabhängig vom anbringen des Halters.

In einer bevorzugten Ausführungsform weist der Gleitteil eine Klemmvorrichtung für den Adapter auf. Dadurch wird ein Bewegen des Adapters, und damit auch des damit verbundenen Implantats, im Innern des Behälters verhindert.

Vorzugsweise ist die Anordnung des Adapters am Aufnahmeteil derart ausgestaltet, dass die Kontaktfläche zwischen dem Adapter und dem Aufnahmeteil/Gleitteil minimal ist. Besonders bevorzugt ist es, dass der Gleitteil Federfinger oder Schnapplippen des Adapters umgreift. Dadurch wird die Klemmkraft der Vorrichtung während des Transportes erhöht.

In einer besonders bevorzugten Ausführungsform des Behälters ist die Anordnung des Adapters derart ausgestaltet, dass die Kontaktfläche zwischen dem Adapter und dem Implantat minimal ist, ebenso wie die Kontaktfläche zwischen Aufnahmeteil/Gleitteil und Adapter. Eine Sterilisation von Kontaktflächen zwischen zwei Elementen wird dadurch erschwert, dass das Sterilisationsmittel wie beispielsweise EO Gas, Wasserdampf oder H₂O₂, Keime auf diesen Kontaktflächen schlechter erreicht als auf Bereichen, welche für eine Flüssigkeit oder ein Gas frei zugänglich sind. Deshalb ist ein Vorteil einer Minimierung der Kontaktfläche zwischen dem Adapter und dem Implantat sowie zwischen dem Behälter und dem Adapter, dass der Sterilisationsvorgang dadurch erleichtert wird. Je kleiner die Kontaktfläche konstruiert ist, umso kleiner sind die für eine vollständige Sterilisation heiklen Flächen, und entsprechend kann das Risiko von Nebenwirkungen, hervorgerufen durch eine schlechte oder unvollständige Sterilisation, minimiert werden. Dadurch, dass der Adapter in seinem einem Adapterendbereich Federfinger mit Stütznasen aufweist, die nur an den Anlageflächen der Stütznasen mit dem Implantat in Kontakt sind, sind die Kontaktflächen zwischen Adapter und Implantat minimal. Nur wenige Bereiche des Implantats sind für das Sterilisationsmittel damit nicht zugänglich.

In einer bevorzugten Ausführungsform weist das Dentalimplantat keine direkten Kontaktflächen mit dem Aufnahmeteil und/oder Gleitteil auf. Dadurch wird wiederum erreicht, das möglichst alle Bereiche des Implantats (und des Behälters) für das Sterilisationsmittel zugänglich sind. Insbesondere sollte kein Kontakt zwischen Implantat und Gleitteil bestehen.

In einer bevorzugten Ausführungsform wird die manuell auftrennbare Anordnung des Adapters am Aufnahmeteil mittels einer Klemmvorrichtung bewerkstelligt. Diese Klemmvorrichtung kann entweder am Adapter oder am Aufnahmeteil angebracht sein. Diese Klemmvorrichtung umschliesst Teile des Adapters, die vorzugsweise als Federfinger ausgebildet sind. Dadurch hat das Implantat oder das medizinische Instrument minimalen oder keinen direkten Kontakt mit dem Aufnahmeteil, wodurch der Sterilisationsvorgang wiederum erleichtert und die Kontamination des Implantates durch Behältermaterialien verhindert wird. Zudem ist das medizinische Instrument oder Implantat, insbesondere das dentalmedizinisches Instrument oder das Dentalimplantat, weniger anfällig auf Beschädigungen während des Transports, wenn es keine Kontaktfläche mit dem Behälter aufweist und bei Erschütterungen entsprechend nicht am Behälter aufschlägt und dadurch beschädigt werden kann.

In einer weiteren bevorzugten Ausführungsform ragt der Halter nach dem Einführen in den Behälter an seinem einen Ende über die entsprechende Stirnseite, welche vom Aufnahmeteil gebildet wird, hinaus, um den Zugang zum Halter von ausserhalb des Behälters zu erleichtern. Zu diesem Zweck ist der Aufnahmeteil vorzugsweise an mindestens einer Stirnseite offen. Idealerweise weist der Halter einen Schaft auf, der dazu dient, in ein Eindrehwerkzeug eingeführt zu werden. Dadurch kann der Operateur das Implantat zusammen mit dem Halter und dem Adapter mit dem Eindrehwerkzeug aus dem Behälter entnehmen, ohne es berühren zu müssen, und damit optimale Sterilisationsbedingungen einhalten. Dabei klickt der Operateur idealerweise mit dem Eindrehwerkzeug in den Schaft des Halters, bevor der Verriegelungsmechanismus des Behälters geöffnet wird.

In einer weiteren bevorzugten Ausführungsform des Behälters ist der Aufnahmeteil formstabil ausgebildet. Durch die Formstabilität wird erreicht, dass - insbesondere während des Transports - das medizinische Instrument oder Implantat, insbesondere das dentalmedizinische Instrument oder das Dentalimplantat, optimal geschützt ist und vor Beschädigungen oder Kontaminationen verschont wird.

In einer bevorzugten Ausführungsform ist der Aufnahmeteil zumindest im Wesentlichen röhrenförmig ausgebildet. Zudem weist der Aufnahmeteil vorzugsweise schlitzartige Löcher für einen besseren Zugang des Sterilisationsmediums zur Oberfläche des Implantats bzw. Instruments auf.

Anstelle einer zweiteiligen Ausführungsform, bei der Halter und Adapter zwei separate Teile sind, ist auch eine einteilige Ausführungsform möglich, bei der der Adapter ein integraler Teil des Halters ist. In diesem Fall muss selbstverständlich der Halter bereits vor dem Transport im Behälter sein, sodass der integrierte Adapter seine Transportsicherungsfunktion wahrnehmen kann. Die zweiteilige Ausführungsform ist allerdings bevorzugt.

Bei der zweiteiligen Ausführungsform ist der Adapter am Halter befestigbar. Der Adapter ist in einem Adapterendbereich mit Federfingern ausgestattet, welche Stütznasen aufweisen. Die Stütznasen bilden Auflageflächen für das Implantat. An diesen Auflageflächen wird das Implantat gestützt und gehalten, wobei sie den koronalen Endbereich des Implantates untergreifen und ihn entsprechend formschlüssig halten. Diese Konstruktion ermöglicht ein sicheres Halten des Implantates, obschon nur eine geringe Fläche des Implantates mit dem Adapter Kontakt hat. Dadurch wird eine gute Sterilisierbarkeit des Implantates ermöglicht.

In der einteiligen Ausführungsform ist der Adapter ein integraler Teil des Halters, das heisst, dass der Halterendbereich mit Federfingern, welche Stütznasen aufweisen, ausgestattet ist. Die Stütznasen haben dabei die gleiche Funktion wie bei der zweiteiligen Ausführungsform.

Eine wichtige Konstruktionseigenschaft des Adapters ist es, dass die Auflagefläche zwischen den Stütznasen und dem Dentalimplantat eine minimale Fläche aufweisen. Die minimal ausgebildeten Kontaktflächen zwischen dem Adapter und dem Implantat ermöglichen eine einfache Sterilisation des Implantates oder Instruments. Minimal bedeutet, dass die einzelnen Kontaktflächen weniger als 1 mm² betragen. Je kleiner die Kontaktfläche konstruiert wird, umso kleiner sind die für eine vollständige Sterilisation heiklen Flächen, und entsprechend kann das Risiko von allfälligen Nebenwirkungen, hervorgerufen durch eine schlechte oder unvollständige Sterilisation des Implantates, minimiert werden.

In einer weiteren bevorzugten Ausführungsform ist das Implantat ein einteiliges Implantat, d.h. Verankerungsteil und Aufbauteil sind einstückig, und vorzugsweise ist das Implantat ein Keramikimplantat. Idealerweise ist der Aufbauteil (Abutment) des Implantates derart ausgestaltet, dass die Auflageflächen der Stütznasen des Adapters die Schulterfläche des Abutments untergreifen können und so das Implantat formschlüssig halten.

Der Aufnahmeteil, der Gleitteil und der Adapter sind idealerweise aus einem biokompatiblen, sterilisierbaren Material gefertigt, um eine Sterilisation einfach durchführen zu können. In einer besonders bevorzugten Ausführungsform besteht das Material des Aufnahmeteils, des Gleitteils und des Adapters beispielsweise aus Titan oder Kunststoff, oder aus rostfreiem Stahl, Keramik oder einem Kompositmaterial.

Die Erfindung wird anhand eines in der Zeichnung dargestellten Ausführungsbeispiels erläutert. Es zeigen rein schematisch:
- Fig. 1: eine perspektivische Darstellung eines erfindungsgemässen Behälters mit einem Aufnahmeteil und einem Gleitteil;
- Fig. 2: eine perspektivische Darstellung eines Dentalimplantats und eines Adapters;
- Fig. 3: eine Draufsicht auf einen erfindungsgemässen Behälter enthaltend ein Dentalimplantat und einen Adapter, wobei der Gleitteil des Behälters in einer Schliessstellung ist;
- Fig. 4: eine Vergrösserung eines Verriegelungs- mechanismus', der zwischen dem Gleitteil und dem Aufnahmeteil des Behälters aus Figur 3 wirkt, wobei der Rastzahn des Gleitteils in den Rastvertiefungen des Aufnahmeteils ruht;
- Fig. 5: den Verriegelungsmechanismus aus Figur 4, wobei der Rastzahn aus den Rastvertiefungen heraus- gehoben ist;
- Fig. 6: eine perspektivische Darstellung des Behälters aus Figur 3, mit einem am Adapter angebrachten Halter;
- Fig. 7: eine Draufsicht auf den Behälter aus Figur 6, wobei der Gleitteil in einer Offenstellung ist; und
- Fig. 8: das Herausheben von Dentalimplantat, Adapter und Halter aus dem Behälter aus Figur 7 in perspektivischer Darstellung.

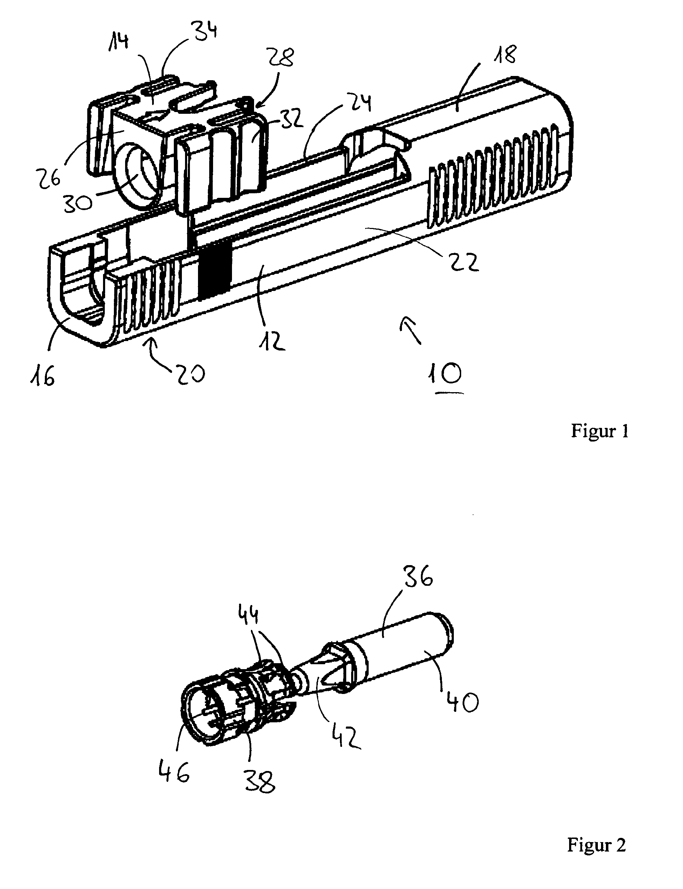

Figur 1 zeigt eine perspektivische Ansicht einer bevorzugten Ausführungsform eines erfindungsgemässen Behälters 10. Der Behälter 10 umfasst einen Aufnahmeteil 12 und einen lösbar damit verbindbaren Gleitteil 14. Der Aufnahmeteil 12 ist im Wesentlichen röhren- oder wannenförmig und ist an einer Stirneseite 16 offen. Der Aufnahmeteil 12 weist eine Oberseite 18, eine Unterseite 20 und zwei seitliche Wände 22, 24 auf.

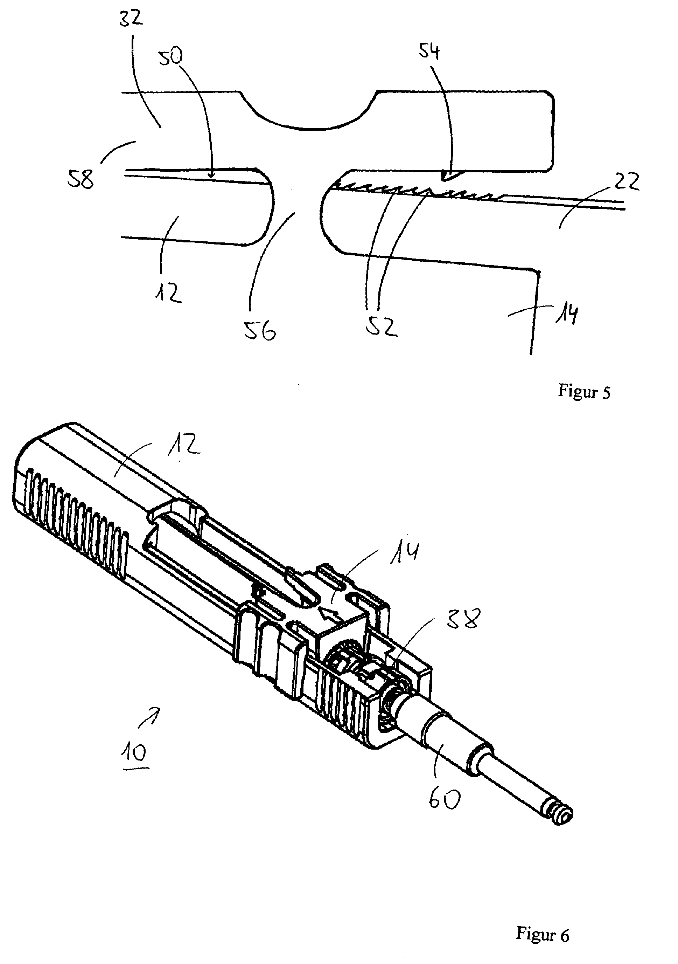

Der Gleitteil 14 ist von der Oberseite 18 her auf den Aufnahmeteil 12 aufsteckbar und weist zwei offene, stirnseitige Enden 26, 28 auf. Das stirnseitige Ende 26 weist eine kreisförmige Öffnung 30 auf, durch welche ein Halter (siehe Figur 6) mit einem im Behälter 10 gelagerten medizinischen Instrument oder Implantat verbunden werden kann. Der Gleitteil 14 weist ausserdem zwei Greifbereiche 32, 34 auf, welche im verbundenen Zustand die zwei seitlichen Wände 22, 24 des Aufnahmeteils 12 umgreifen.

Figur 2 zeigt eine perspektivische Darstellung eines Dentalimplantats 36 und eines damit lösbar verbindbaren Adapters 38, welche während Transport und Lagerung beispielsweise in einem erfindungsgemässen Behälter 10 aufbewahrt werden können.

Das gezeigte Dentalimplantat 36 ist ein einteiliges, einstückiges Keramikimplantat und weist einen Verankerungsteil 40, der dazu bestimmt ist, das Dentalimplantat 36 im Kieferknochen eines Patienten zu verankern, und einen Aufbauteil 42 auf, der dazu bestimmt ist, mit einem Prothetikelement, zum Beispiel einer Krone, verbunden zu werden. Alternativ wäre es aber natürlich auch möglich, ein beliebiges anderes Dentalimplantat, zum Beispiel ein zweiteiliges Implantat oder eines aus Metall, im erfindungsgemässen Behälter 10 zu lagern.

Der gezeigte Adapter 38 ist im Wesentlichen kreiszylinderförmig und weist an einer Stirnseite mehrere Federfinger 44 auf, mithilfe derer der Adapter 38 lösbar mit dem Dentalimplantat 36 verbunden werden kann. Zu diesem Zweck wird der Adapter 38 auf den Aufbauteil 42 des Dentalimplantats 38 aufgesteckt, so dass die Federfinger 44 den Aufbauteil 42 umgreifen. An der den Federfingern 44 gegenüberliegenden Stirnseite weist der Adapter 38 eine im Wesentlichen kreisförmige Öffnung 46 auf, durch welche ein Halter (siehe Figur 5) mit dem Dentalimplantat 36 verbunden werden kann.

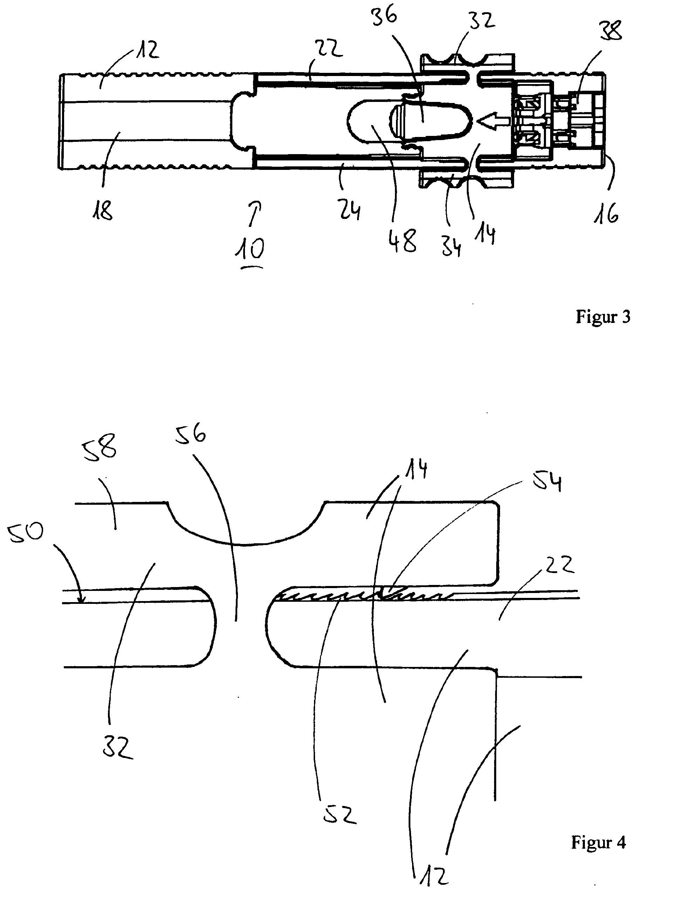

Figur 3 zeigt eine Draufsicht auf eine Ausführungsform eines erfindungsgemässen Behälters 10 mit einem Aufnahmeteil 12 und einem lösbar damit verbundenen Gleitteil 14. Der im Wesentlichen röhrenförmige Aufnahmeteil 12 weist in seiner Oberseite 18 und seiner Unterseite 20 schlitzartige Löcher 48 auf, die die Sterilisation des Behälters 10 und eines darin enthaltenen Dentalimplantats 36 und Adapters 38 erleichtern.

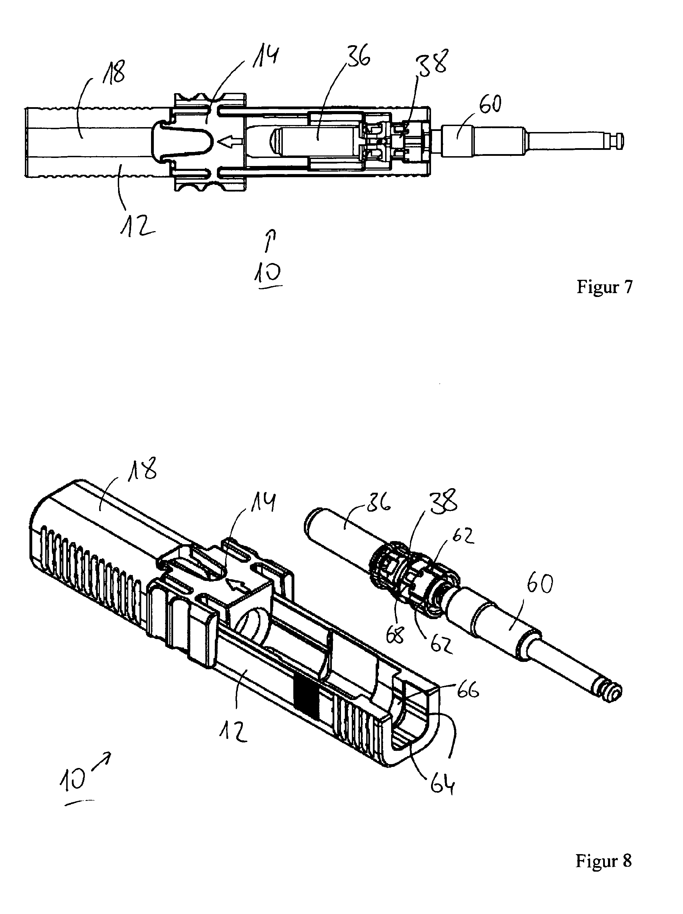

Im gezeigten Behälter 10 sind ein Dentalimplantat 36 und ein damit verbundener Adapter 38 gelagert. Der Gleitteil 14 ist von der Oberseite 18 her auf den Aufnahmeteil 12 aufgesteckt und umgreift die zwei seitlichen Wände 22, 24 mit seinen Greifbereichen 32, 34. Der Gleitteil 14 ist parallel zu einer Längsachse des Aufnahmeteils 12 bewegbar, wobei er durch Verschieben entlang des Aufnahmeteils 12 von einer Schliessstellung (in Figur 3 gezeigt) in eine Offenstellung (siehe Figur 7) bewegt werden kann. Dabei wird der Gleitteil 14 durch die zwei seitlichen Wände 22, 24 geführt und bleibt in Kontakt mit dem Aufnahmeteil 12.

Figuren 4 und 5 zeigen eine vergrösserte Darstellung des zwischen dem Gleitteil 14 und dem Aufnahmeteil 12 wirkenden Verriegelungsmechanismus': Der Aufnahmeteil 12 weist an der Aussenseite 50 seiner seitlichen Wand 22 eine Serie von Rastvertiefungen 52 auf, welche mit einem Rastzahn 54 an der dem Aufnahmeteil 12 zugewandten Seite des Greifbereichs 32 des Gleitteils 14 zusammen wirkt. Ein Steg 56 verbindet den Greifbereich 32 mit dem Rest des Gleitteils 14.

Ohne äussere Einwirkung (Figur 4) berührt der Greifbereich 32 des Gleitteils 14 die seitliche Wand 22 des Aufnahmeteils 12 nur mit dem Rastzahn 54. Dabei greift der Rastzahn 54 in die Rastvertiefungen 52 ein und verhindert ein Verschieben des Gleitteils 14 relativ zum Aufnahmeteil 12. Durch Ausüben einer Druckkraft auf den vom Rastzahn 54 aus gesehen jenseits des Stegs 56 liegenden Bereich 58 des Gleitteils 14 wird der Rastzahn 54 von der Oberfläche 50 der seitlichen Wand 22 abgehoben und der Verriegelungsmechanismus somit entriegelt (Figur 5). Zu diesem Zweck ist dieser Steg 56 ist zumindest so flexibel, dass der Greifbereich 32 relativ zum Rest des Gleitteils 14 soweit rotiert werden kann, dass der Rastzahn 54 aus den Rastvertiefungen 52 herausgehoben werden kann. Das Entriegeln des Verriegelungsmechanismus' bewirkt, dass der Gleitteil 14 nun von der Schliessstellung in die Offenstellung bewegt werden kann.

Figur 6 zeigt eine perspektivische Darstellung des Behälters 10 aus Figur 3, wobei zusätzlich ein Halter 60 mit dem Adapter 38 und dem Dentalimplantat 36 (in dieser Figur nicht sichtbar) lösbar verbunden ist. Der Gleitteil 14 befindet sich weiterhin in der Schliessstellung.

Aufgrund der offenen Stirnseite 16 des Aufnahmeteils 12 und der kreisförmigen Öffnung 30 im Gleitteil ist der Adapter 38 von aussen zugänglich, und der Halter 60 kann bereits in Schliessstellung mit dem Adapter 38 verbunden werden. Der Halter 60 dient dazu, das Dentalimplantat 36 und den Adapter 38 aus dem Behälter 10 zu entfernen.

Figur 7 zeigt eine Draufsicht auf den Behälter 10 aus Figur 6, wobei sich der Gleitteil 14 nun in einer Offenstellung befindet. In der Offenstellung werden das Dentalimplantat 36 und der Adapter 38 nicht mehr durch den Gleitteil 14 umschlossen, sondern sind im Aufnahmeteil 12 von dessen Oberseite 18 her frei zugänglich.

In Figur 8 ist das Herausheben des Dentalimplantats 36 zusammen mit dem Adapter 38 aus dem Behälter 10 gezeigt. Dazu wird der lösbar mit dem Adapter 38 verbundene Halter 60 angehoben und durch die teilweise offene Oberseite 18 des Aufnahmeteils 14 herausgehoben, ohne dass ein direkter Kontakt des Anwenders mit dem Implantat 36 nötig wäre.

Um eine Rotation des Adapters 38 relativ zum Aufnahmeteil 12 zu verhindern, weisen Adapter 38 und Aufnahmeteil 12 vorzugsweise eine oder mehrere korrespondierende, in axialer Richtung verlaufende Vertiefungen 62 respektive Vorsprünge 64 auf. Zudem weist der gezeigte Aufnahmeteil 12 einen in Umfangsrichtung verlaufenden Vorsprung 66 auf, der im verpackten Zustand mit einer in Umfangsrichtung verlaufenden Vertiefung 68 am Adapter 38 zusammenwirkt und verhindert, dass sich der Adapter 38 - und damit auch das damit verbundene Implantat - in axialer Richtung relativ zum Aufnahmeteil 12 verschieben kann.

## Patentansprüche

1. Behälter (10) für ein medizinisches Instrument oder ein Implantat, insbesondere für ein dentalmedizinisches Instrument oder ein Dentalimplantat (36), umfassend einen Aufnahmeteil (12) und einen relativ zu diesem von einer Schliessstellung in eine Offenstellung bewegbaren Gleitteil (14), wobei der Behälter (10) einen Verriegelungsmechanismus aufweist, der zwischen dem Aufnahmeteil (12) und dem Gleitteil (14) wirkt, **dadurch gekennzeichnet, dass** der Verriegelungsmechanismus eine zwischen dem Aufnahmeteil (12) und dem Gleitteil (14) wirkende Rastverbindung aufweist.

2. Behälter (10) gemäss Anspruch 1, **dadurch gekennzeichnet, dass** der Gleitteil (12) durch ein Verschieben entlang des Aufnahmeteils (14) von der Schliessstellung in die Offenstellung bewegbar ist.

3. Behälter (10) gemäss Anspruch 2, **dadurch gekennzeichnet, dass** der Gleitteil (12) durch ein Verschieben parallel zu einer Längsachse des Aufnahmeteils (14) von der Schliessstellung in die Offenstellung bewegbar ist.

4. Behälter (10) gemäss einem der Ansprüche 1 bis 3, **dadurch gekennzeichnet, dass** der Gleitteil (12) bei der Bewegung von der Schliessstellung in die Offenstellung in Kontakt mit dem Aufnahmeteil (14) bleibt.

5. Behälter (10) gemäss einem der Ansprüche 1 bis 4, **dadurch gekennzeichnet, dass** der Aufnahmeteil (12) mindestens eine Rastvertiefung (52) aufweist und dass der Gleitteil (14) mindestens einen Rastzahn (54) aufweist, der mit der mindestens einen Rastvertiefung (52) am Aufnahmeteil (12) zusammenwirkt.

6. Behälter (10) gemäss einem der Ansprüche 1 bis 5, **dadurch gekennzeichnet, dass** er einen Adapter (38) und ein Dentalimplantat (36) enthält.

7. Behälter (10) gemäss Anspruch 6, **dadurch gekennzeichnet, dass** das Dentalimplantat (36) nur minimale Kontaktflächen mit dem Adapter (38) aufweist.

8. Behälter (10) gemäss Anspruch 6 oder 7, **dadurch gekennzeichnet, dass** der Aufnahmeteil (12) eine Klemmvorrichtung für den Adapter (38) aufweist.

9. Behälter (10) gemäss einem der Ansprüche 6 bis 8, **dadurch gekennzeichnet, dass** die Anordnung des Adapters (38) am Aufnahmeteil (12) derart ausgestaltet ist, dass die Kontaktfläche zwischen dem Adapter (38) und dem Aufnahmeteil (12) minimal ist.

10. Behälter (10) gemäss einem der Ansprüche 6 bis 9, **dadurch gekennzeichnet, dass** der Gleitteil (14) Federfinger (44) des Adapters (38) umschliesst.

11. Behälter (10) gemäss einem der Ansprüche 6 bis 10, **dadurch gekennzeichnet, dass** das Dentalimplantat (36) keine Kontaktflächen mit dem Aufnahmeteil (12) und/oder dem Gleitteil (14) aufweist.

12. Behälter (10) gemäss einem der Ansprüche 1 bis 11, **dadurch gekennzeichnet, dass** der Aufnahmeteil (12) an mindestens einer Stirnseite (16) offen ist.

13. Behälter (10) gemäss einem der Ansprüche 1 bis 12, **dadurch gekennzeichnet, dass** der Aufnahmeteil (12) formstabil ausgebildet ist.

14. Behälter (10) gemäss einem der Ansprüche 1 bis 13, **dadurch gekennzeichnet, dass** der Aufnahmeteil (12) zumindest im Wesentlichen röhrenförmig ausgebildet ist und schlitzartige Löcher (48) für einen Sterilisationsvorgang aufweist.

15. Behälter (10) gemäss einem der Ansprüche 1 bis 14, **dadurch gekennzeichnet, dass** der Aufnahmeteil (12), der Gleitteil (14) und der Adapter (38) aus einem biokompatiblen Material, vorzugsweise aus Titan oder Kunststoff gefertigt sind.
